Europäisches Patentamt

(19) European Patent Office  (11) Publication number: **0 127 149**

Office européen des brevets  **B1**

(12) EUROPEAN PATENT SPECIFICATION

(45) Date of publication of patent specification: **17.01.90**  (51) Int. Cl.⁵: **B 29 C 71/04, B 29 C 59/14**

(21) Application number: **84105965.2**

(22) Date of filing: **25.05.84**

(54) A method for the treatment of a thermoplastic resin.

(30) Priority: **31.05.83 JP 95051/83**
**15.08.83 JP 148055/83**

(43) Date of publication of application:
**05.12.84 Bulletin 84/49**

(45) Publication of the grant of the patent:
**17.01.90 Bulletin 90/03**

(84) Designated Contracting States:
**BE DE FR GB NL**

(56) References cited:
**DD-A- 155 570      FR-A-2 140 665**
**DE-A-2 952 732     US-A-3 754 117**
**FR-A-1 158 762     US-A-3 959 567**
**FR-A-1 222 476**
**PATENTS ABSTRACTS OF JAPAN, vol. 4, no. 46**
**(C-6)528r, 8th February 1980, page 47 C 6; & JP -**
**A - 55 18 469 (FUJI SHASHIN FILM K.K.)**
**INTERNATIONAL POLYMER SCIENCE &**
**TECHN., vol. 6, no. 6, 1979, pages T/6-T/7,**
**Shrewsbury, GB; V.G. TOBAKAREV et al.:**
**"Study of plasma modification of the surfaces of**
**polymeric materials"**

(73) Proprietor: **IDEMITSU PETROCHEMICAL CO.**
**LTD.**
**1-1, Marunouchi 3-chome Chiyoda-ku**
**Tokyo (JP)**

(72) Inventor: **Nagashima, Shunichi**
**No. 1218-2, Kamiizumi Sodegaura-machi**
**Kimitsu-gun Chiba-ken (JP)**

(74) Representative: **Türk, Dietmar, Dr. rer. nat.**
**Türk, Gille + Hrabal Patentanwälte Bruckner**
**Strasse 20**
**D-4000 Düsseldorf 13 (DE)**

(56) References cited:
**J.R. HOLLAHAN et al.: "Techniques and**
**Applications of Plasma Chemistry", pages 116-**
**141, section 3.3. "Applications of plasma-solid**
**reactions to polymers", 1974, Wiley Interscience,**
**New York, US;**

**Fachlexikon, ABC Physik, Band 2, Seite 1171,**
**Verlag Harri Deutsch, Zürich und**
**Frankfurt/Main**

# EP 0 127 149 B1

## Description

The present invention relates to a method for the treatment of a thermoplastic resin for improving the surface properties, e.g. hydrophilicity, susceptibility to adhesion, printability, etc., of a thermoplastic resin article produced therefrom, which method comprises subjecting the thermoplastic resin to a low pressure gas plasma in which a gas or a mixture of gases which improve the surface is blown to the surface of the resin in a closed chamber.

The present invention further relates to a method for the preparation of a laminated material according to the preamble of Claim 3.

Needless to say, thermoplastic resins have excellent properties and are easily moldable in general so that they are widely used in a variety of application fields. Thermoplastic resins represented by polyolefins are, however, poor in the adhesion susceptibility, paintability, printability, plating adaptability, wearing resistance, antistatic performance and the like properties due to their low polarity so that these resins are sometimes subjected to a certain surface treatment with an object to improve the surface properties thereof in these respects.

Known methods for the surface treatment of thermoplastic resins include a wet-process treatment with a chromic acid mixture, corona discharge treatment, flame treatment and the like. The treating method using a chromic acid mixture, however, has a problem in the disposal of the spent acid solution and the other methods are not free from the inherent problem that the types of the thermoplastic resins to which the method is applicable are limited.

Alternatively, a method for the modification is known by the graft polymerization of an unsaturated carboxylic acid or a derivative. This method is, however, performed in a complicated process so that the resin prepared by the method is unavoidably expensive. When then method is performed under melting of the resin, in addition, a part of the unsaturated carboxylic acid or the derivative thereof is always left unreacted and must be removed with additional costs.

In view of the above problems, one of the recently developed promising methods for the treatment of a thermoplastic resin in the above mentioned object is the method of vacuum plasma treatment. It has been proposed in JP—B—57-115431 that the vacuum plasma treatment of a thermoplastic resin article for surface improvement can be performed with high efficiency by keeping the surface temperature of the resin article at a relatively high temperature of from 40 to 100°C. A problem in this method is that the treatment temperature should be lower by at least 10°C than the melting or softening point of the resin under treatment in order to avoid deformation of the shaped article of the thermoplastic resin.

Since the method of the vacuum plasma treatment is a dry process undertaken in a high vacuum, the method requires a hermetically sealable vacuum-tight apparatus. Therefore, the method is conventionally performed in a batch-wise process so that a great difficulty is encountered when the method is practiced in an industrial scale.

Various methods and apparatuses have been proposed in order to solve these problems accordingly. For example, JP—B—57-67636 discloses a method and apparatus for the continuous plasma treatment in which the plasma treatment chamber is provided at the front and at the rear with a plural number of zones each under a vacuum pressure differing in a stepwise manner from the adjacent ones. Further, JP—B—57-18737 discloses an apparatus for the continuous plasma treatment in which the material under treatment is introduced into the plasma chamber from the open air through a front preparatory vacuum chamber and, after completion of the plasma treatment, continuously brought out to the open air through a rear preparatory vacuum chamber.

In each of these prior art methods and apparatuses, however, the plasma treatment chamber must be provided with two sealing devices to the atmosphere at the inlet port and outlet port of the material so that the apparatus is unavoidably expensive resulting in a high cost for the plasma treatment. In addition, it is usually difficult to provide a heating means of the material with an object of increasing the effectiveness of the treatment, in particular, with no possibility of heating at the softening point of the resin or higher. Moreover, the films, sheets and the like materials before the plasma treatment are subject to ready contamination with dusts, dirts, fungi and the like deposited thereon which can be prevented only by use of elaborate equipments.

When a laminated material is prepared using sheets of two kinds or more of different thermoplastic resins or sheets of a thermoplastic resin and another kind of material in combination, on the other hand, these sheets are bonded together by use of an adhesive or they are co-extruded together with an adhesive resin sandwiched therebetween. The problems in these methods are the essential use of an adhesive as the third component and the necessity of an extrusion equipment for the adhesive resin.

US—A—3 754 117 discloses a method for the treatment of a thermoplastic resin which comprises subjecting the thermoplastic resin to a corona discharge in an open system at a temperature equal to or higher than the melting or softening point of the resin. However, in such an open system influences of the air make a homogeneous treatment difficult, and side reactions as the generation of ozone make it difficult to obtain satisfactory results including an improvement in adhesivity.

FR—A—1 222 476 teaches that adhesive properties of plastic surfaces can be improved when instead of a corona discharge a low pressure plasma is used in a closed chamber for example at a pressure of 1 Torr $(1,31 \times 10^{-3}$ bar). However, to heat the resin to be treated to a temperature at least 5°C higher than its melting point or softening point and simultaneously pass it through the plasma treatment chamber continuously is complicated in a closed system.

It is therefore an object of the present invention to provide a novel method for the treatment of a thermoplastic resin freed from all of the above described problems and disadvantages in the prior art methods and which is useful for obtaining a thermoplastic resin imparted with various improved physical properties.

The second object of the present invention is to provide an economically advantageous and efficient method for the preparation of a laminated material by the method of co-extrusion or lamination with a thermoplastic resin and different thermoplastic resin or another material in principally having no adhesiveness to the thermoplastic resin by use of no adhesive.

Subject-matter of the present invention is according to a first aspect a method for the treatment of the thermoplastic resin which comprises subjecting the thermoplastic resin to a low pressure gas plasma in which a gas or a mixture of gases which improves the surface treatment in a closed chamber is blown to the surface of a resin, which is characterized in that the plasma treatment is carried out under the following conditions:

the thermoplastic resin to be treated is selected from the group consisting of high-density polyethylene, low-density polyethylene, polypropylene, copolymers of ethylene and acrylic acid, copolymers of ethylene and vinyl acetate, copolymers of ethylene and vinyl alcohol, copolymers of ethylene and propylene, copolymers of ethylene and butene-1, polyesters, polycarbonate, polyamides, general purpose polystyrenes, high-impact polystyrenes, AS resins, ABS resins, polyvinyl chloride, polyvinylidene chloride, polyvinyl alcohol and acrylic resins,

the pressure in the chamber is 0,005 to 20 Torr (0,67 to 2666,4 Pa),

the gas to be used for the gas plasma is selected from $N_2$, $O_2$, $N_2O$ and $CO_2$ and

the temperature in the chamber is at least 5°C, preferably 5 to 10°C higher than the melting or softening point of the resin.

According to a preferred embodiment of the invention in this method the low pressure plasma treatment of the thermoplastic resin is performed directly as the thermoplastic resin is extruded out of the die of an extrusion molding machine and introduced into the low pressure plasma treatment chamber.

A further subject-matter of the present invention is according to a second aspect a method for the preparation of a laminated material which comprises subjecting a thermoplastic resin to a low pressure gas plasma in which a gas or a mixture of gases which improves the surface treatment in a closed chamber is blown to the surface of the resin and laminating the thus low pressure plasma-treated thermoplastic resin with another material which is a material different from the thermoplastic resin, which is characterized in that the plasma treatment is carried out under the following conditions:

the thermoplastic resin to be treated is selected from the group consisting of high-density polyethylene, low-density polyethylene, polypropylene, copolymers of ethylene and acrylic acid, copolymers of ethylene and vinyl acetate, copolymers of ethylene and vinyl alcohol, copolymers of ethylene and propylene, copolymers of ethylene and butane-1 polyesters, polycarbonate, polyamides, general purpose polystyrenes, high-impact polystyrenes, AS resins, ABS resins, polyvinyl chloride, polyvinylidene chloride, polyvinyl alcohol and acrylic resins,

the pressure in the chamber is 0,005 to 20 Torr (0,67 to 2666,4 Pa),

the gas to be used for the gas plasma is selected from $N_2$, $O_2$, $N_2O$ and $CO_2$, and

the temperature in the chamber is at least 5°C, preferably 1 to 10°C higher than the melting or softening point of the resin, and

the material different from the plasma-treated thermoplastic resin is selected from the group consisting of thermoplastic resins different from the plasma-treated thermoplastic resin, papers, and metals.

The gist of the present invention is the treatment of the thermoplastic resin in a molten state with the low pressure plasma. If this treatment is not effected in the molten state, the adhesivity obtained is rather poor, even when low pressure plasma treatment is effected. The effect varies greatly with the temperature of the resin, that is with the fact, whether the temperature is above or below the melting or softening point of the resin. In detail, when vacuum plasma treatment is effected at a temperature lower than the melting point or softening point of the resin, as shown in Comparative Example 1 or Comparative Example 2 of the present invention, no improvement is achieved in regard to the contact angle of water, and the peeling resistance by 180°C pulling is as low as 60 g/15 mm, as shown in Comparative Example 3.

According to the present invention, on the other hand, hydrophilicity increases greatly (Examples 1 to 3) and the peeling resistance by 180°C pulling is remarkably improved to 650 g/15 mm under the above conditions similar to those of Comparative Example 3 (Example 4). The other Examples and Comparative Examples also show that the effect depends on whether the temperature is above or below the melting point or softening point of the resin used.

Figures 1 and 2 are each a schematic illustration of an example of the apparatus used for practicing the low pressure plasma treatment according to the first aspect of the invention.

Figures 3 and 4 are each a schematic illustration of the process of melt-kneading according to another embodiment of the inventive method.

Figure 5 is a schematic illustration of an example of the apparatus for practicing the method for the preparation of a laminated body according to the second aspect of the present invention.

The thermoplastic resins to which the inventive method is applicable include high-density polyethylene, low-density polyethylene, polypropylene, copolymers of ethylene and acrylic acid, copolymers of ethylene and vinyl acetate, copolymers of ethylene and vinyl alcohol; copolymers of ethylene and propylene, copolymers of ethylene and butene-1 polyesters; polycarbonate; polyamides; general-purpose polystyrenes, high-impact polystyrenes, AS resins, ABS resins; polyvinyl chloride; polyvinylidene chloride; polyvinyl alcohol and acrylic resins. These thermoplastic resins may be used either singly or as a blend of two kinds or more according to need. When two kinds or more of the resins are used in combination, the compatibility thereof is of no particular criticality and incompatible resins may be used in combination. It is further optional that the thermoplastic resin is admixed with conventional additives including various kinds of stabilizers against oxidation, heat, light, fillers such as calcium carbonate, talc, clay, silica, reinforcing materials such as glass fibers, carbon fibers, metal fibers, organic fibers, rubbers, lubricants, antistatic agents, plasticizers, coloring materials, e.g. titanium dioxide, and others each in a suitable amount.

In the method of the present invention, the temperature at which the low-pressure plasma treatment is performed should be equal to or higher than the melting point when the thermoplastic resin is crystalline or the softening or glass transition point when the resin is non-crystalline. The actual conditions for practicing the treatment according to the invention are not particularly limitative excepting the above mentioned temperature condition. For example, the treatment may be effected on the film-like body in a molten state immediately after the melt extrusion and prior to cooling or may be effected on the resin once cooled and then reheated up to the above mentioned temperature. Alternatively, the low-pressure plasma treatment may be performed when the molten resin is under continuous kneading. The treatment of sheets, films and other ready-shaped articles should be performed by increasing the surface temperature thereof up to the above mentioned temperature with a suitable outer heating means. The treatment may be carried out either in a continuous process or in a batch-wise process.

The actual temperature of the thermoplastic resin under the low pressure plasma treatment should be adequately selected in consideration of the type of the resin, form of the shaped article, molding method, conditions of the treatment and other factors although it is preferable that the temperature is from 5 to 10°C higher than the melting or softening point of the resin as a general guideline.

The low pressure plasma here implied is a non-equilibrium plasma obtained by the activation of gas molecules with glow discharge, radio frequency discharge, microwave discharge and the like. The low pressure plasma treatment of a thermoplastic resin is performed by exposing the resin to the plasma atmosphere generated by the electric discharge under a pessure in the range from 0.005 to 20 Torr or, preferably, in the range from 0.02 to 5 Torr or, alternatively, by blowing the plasma at the resin to be treated. The length of time for the treatment is not particularly limitative although a time of 1 second to 10 minutes is usually sufficient.

Examples of the gas which can be used for gas plasma at the low pressure plasma treatment are a non-polymer-forming gas such as air, oxygen, nitrogen, hydrogen, argon, helium, xenon, carbon dioxide, nitrous oxide, nitrogen monoxide and nitrogen dioxide or a polymer-forming gas such as methane, ethane, ethylene, acetylene, benzene, tetrafluoroethylene, tetramethyl silane, tetramethyl tin and acrylonitrile. These gases may be used as a mixture of two kinds or more according to need. Selection of the gas should be dependent on the kind of the resin under treatment, the object of the plasma treatment and other factors.

The conditions of the low pressure plasma treatment according to the invention include no particular limitations excepting the temperature which should be at least 5°C higher than the melting or softening point of the thermoplastic resin as the material of the article under treatment. In a procedure, for example, the thermoplastic resin is put into the plasma chamber which is then evacuated to an appropriate pressure and, while the resin is heated before or after evacuation to a desired temperature and kept at the temperature, a gas is introduced into the chamber followed by the glow discharge or other electric discharge to generate plasma to which the resin is exposed. A very high efficiency of the treatment is obtained in this manner because the treatment is effected on the thermoplastic resin in a highly active state at the melting or softening point of the resin or higher so that the thus treated resin is imparted with excellent properties. The method of the invention can be performed satisfactorily by use of a conventional apparatus for the low pressure plasma treatment merely with control of the temperature of the resin within the specified range but the characteristic features of the inventive method are clearer when the treatment is performed according to the procedure described below.

In particular, the preferable procedures include the treatment of an extruded resin film in a molten or softened state immediately after melt extrusion before cooling and solidification and the treatment of the resin while it is molten and under continuous kneading. These methods are advantageous owing to the use of a simple apparatus and the high efficiency of the treatment.

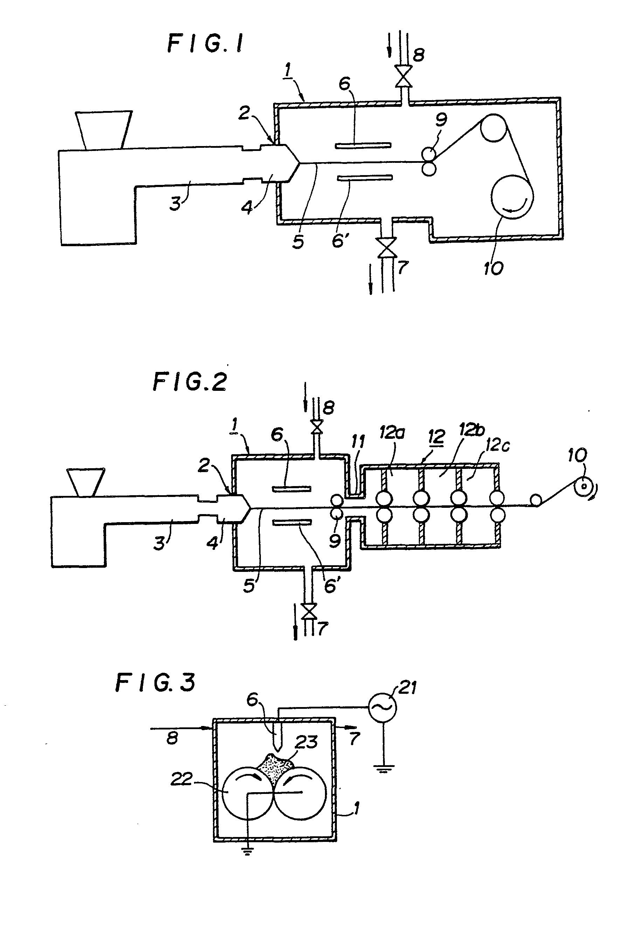

In the following, an embodiment of the treating method according to the invention is described in detail with reference to Figures 1 and 2 illustrating an example of the apparatus for the continuous treatment.

As is shown in Figure 1, the extrusion die 4 of an extrusion molding machine 3 is mounted on the inlet

4

port 2 of the chamber for vacuum plasma treatment 1 in a vacuum-tight condition. The thermoplastic resin loading the extrusion molding machine 3 is extruded out of the extrusion die 4 and directly introduced into the plasma treatment chamber 1. The sheet or film of the resin 5 shaped at the extrusion die 4 as it is introduced into the plasma treatment chamber 1 is subjected to the vacuum plasma treatment in the chamber 1 before the resin is cooled and solidified. The plasma treatment chamber per se can be any one of known types. As is illustrated in the figure, for example, the chamber 1 is provided with a pair of electrodes 6, 6', a gas exhaust tube 7 and a gas inlet tube 8. While the plasma treatment chamber 1 is evacuated by pumping through the gas exhaust tube 7, a gas such as air, oxygen, argon, and nitrous oxide is introduced into the chamber 1 from the gas inlet tube 8. The low pressure plasma treatment of the sheet or film of the thermoplastic resin 5 is performed by generating plasma with electric discharge between the electrodes 6, 6' while the sheet or film is running between the electrodes. The resin sheet or film 5 after the plasma treatment is cooled by the cooling roller 9 and then taken up on the winding-up unit 10.

Figure 2 is an illustration of another apparatus usable for the treatment according to the invention. The resin sheet or film 5 after the plasma treatment in the same manner as above is led through the exit 11 of the plasma treatment chamber 1 and introduced into the preparatory vacuum chamber 12 which is connected to the exit 11 of the plasma treatment chamber 1 in a vacuum-tight condition. The preparatory vacuum chamber per se can also be any one of known types and constructed, for example, of several sealing chambers 12a, 12b, 12c,... each composed of a housing and a pair of sealing rollers facing up and down. The resin sheet or film 5 runs through the sequence of these sealing chambers in series each under a stepwise increasing pressure and is led to the atmosphere out of the last-positioned sealing chamber which is under a pressure approximating the atmospheric to be taken up on the winding-up unit 10. The apparatus illustrated in Figure 2 provides a possibility of a continuous treatment over a further extended length of time.

According to the above described embodiment of the inventive treating method, the thermoplastic resin is directly introduced into the plasma treatment chamber as it is extrusion-molded out of the extrusion die of the extrusion molding machine so that the surface of the resin sheet or film before or under the treatment is still in a highly active state at a temperature equal to or higher than the melting or softening point of the resin and also in a clean condition without deposition of dusts, dirts, fungi and the like so that the low pressure plasma treatment can be performed with a very high efficiency of the treatment if not to mention the excellent sanitariness of the surface. Moreover, the method of the invention for the preparation of a laminated material provides a possibility of obtaining an unexpectedly high adhesive bonding as is described later by utilizing the surface at an elevated temperature activated by the low pressure plasma treatment. In addition, the inventive treating method is economically advantageous owing to the energy saving achieved by the omission of reheating of the resin sheets or films according to an embodiment of the invention and reduction of the investment for the apparatus which is provided only a single sealing means beween the low pressure plasma treatment chamber and the atmospheric air along with the possibility of conducting the method in a continuous process thus contributing to the reduction of the overall cost for the treatment. The inventive method is also a method with an extremely high productivity since a sheet-like material of the thermoplastic resin imparted with excellent surface properties can be produced continuously in a continued sequence of the extrusion molding and the surface treatment without break.

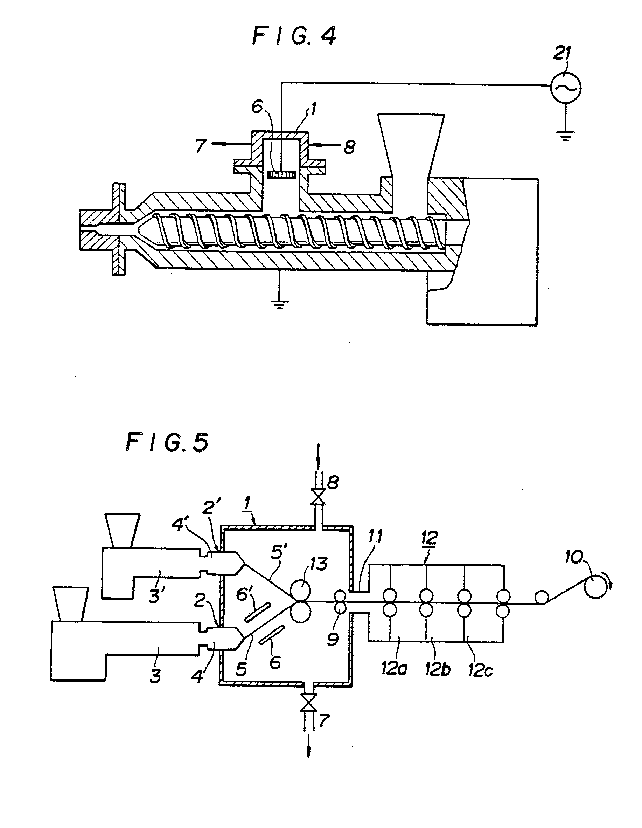

In the following, a detailed description is given with reference to Figures 3 and 4 of the method for the low pressure plasma treatment of a thermoplastic resin under continuous melt-kneading as an embodiment of the invention.

The plasma treatment of a resin under melt-kneading can be performed either in a batch-wise process illustrated in Figure 3 or in a continuous process illustrated in Figure 4. In the apparatus illustrated in Figure 3, a double-roll mill 22 is installed inside the low pressure plasma treatment chamber 1 and the plasma treatment is performed by the generation of plasma inside the chamber using the electrode 6 and the radio frequency generator 21 while the thermoplastic resin 23 is under milling in a molten state on the double-roller mill 22. The double-roller mill as the kneading machine may be replaced with a Banbury mixer or the like blending machine. The apparatus illustrated in Figure 4 is an extruder machine in which the thermoplastic resin is plasma-treated on the way in the kneading cylinder. The extruder machine can be single-screw extruder, multi-screw extruder or a disk extruder. The effect of the plasma treatment performed under such a melt kneading is not limited to the surface of the resin but high uniformity is obtained of the effect throughout the whole volume of the resin which can be directly molded into a shaped article such as a sheet or may be shaped into pellets and the like intermediate form for the resin molding. When the plasma treatment of a resin under melt kneading is performed with simultaneous compounding with a filler, reinforcing material and the like additives, the interfacial adhesion between the resin and the surface of these additives is remarkably improved so that the articles shaped of such a resin blend can be imparted, in particular, with excellent mechanical properties.

As is described above in detail, the low pressure plasma treatment of the inventive method is performed at a temperature at least 5°C higher than the melting or softening point of the thermoplastic resin, which has been developed on the base of an idea quite different from that in the conventional plasma treatment carried out at a temperature lower than that and not capable of achieving the object in the present invention. Besides, the effectiveness of the inventive method is not limited to the very surface of the resin article but can reach the inside of the surface layer to some extent and even good uniformity of the effect of the treatment can be obtained over whole volume of the resin according to the plasma treatment of the resin under melt kneading as is described above.

Different from the conventional methods, the effect of the treatment according to the inventive method is much superior and the resin articles can be imparted with remarkably improved surface properties such as the susceptibility to adhesive bonding, paintability, plating adaptability, printability and antistatic performance. In particular, a great improvement is obtained in the strength of adhesive bonding enabling lamination of a non-adhesive resin along with a possibility of obtaining a resin blend having excellent properties in compounding an incompatible resin, filler and reinforcing material.

In the next place, the second aspect of the present invention relates to a method for the preparation of a laminated material by use of the thermoplastic resin having been plasma-treated according to the above described first aspect of the invention. That is, the method for the preparation of a laminated material comprises subjecting a thermoplastic resin to a low pressure plasma treatment at a temperature at least 5°C higher than the melting or softening point of the resin and laminating the thus vacuum plasma-treated thermoplastic resin with a material other than the thermoplastic resin.

The thermoplastic resin usable in this process can be any one of those named before. The material to be laminated with the plasma-treated thermoplastic resin is, on the other hand, exemplified by thermoplastic resins other than the low pressure plasma-treated resin; metals such as aluminum, iron and copper; thermosetting resins such as FRP cellulosic resins such as cellophane; papers; woven and non-woven cloths; rubbers; woods; ceramics such as glass and porcelain; and others. Lamination is not limited to a single layer of one of these materials but 2 layers or more can be laminated. The form of the laminated layer is also not limitative including, in the case of a metal, for example, metal foils, vapor-deposited films of the metal, metal plates, metal tubes and other forms.

The combinations of the base materials for the preparation of the laminated material can be selected according to the particular object including a combination of two different thermoplastic resins and combination of a thermoplastic resin and another material of a different kind such as a metal. The number of the laminated layers can be 2 or 3 or more according to need.

The thermoplastic resin used here can be a blend of two kinds or more of thermoplastic resins and may be admixed with various kinds of additives including fillers, e.g. calcium carbonate, talc, clay, rubbers, reinforcing materials, plasticizers, stabilizers and others each in an adequate amount.

The process of lamination is generally carried out by overlaying the plasma-treated surface of the thermoplastic resin with another base material to be laminated thereon and bonding them together under pressure, if nencessary, with heating. In this case, it is optional if desired that the surface of the latter material is also subjected to the low pressure plasma treatment and the thus plasma-treated surfaces of the two materials are contacted together and bonded under a pressure to effect lamination. In some cases, the low pressure plasma treatment is not performed over whole surface area of the material but performed only on a part of the surface area. For example, the low pressure plasma treatment in the preparation of a multilayered laminated body is performed on the surface of a sheet material leaving the peripheral portions untreated and such peripheral portions conventionally discarded by trimming but untreated and hence unbonded in this case can readily be recovered and recycled to the next use after reclaiming.

The procedure for the lamination is not particularly limitative and can be performed either continuously following the low pressure plasma treatment or batch-wise. For example, the lamination can be performed continuously in the plasma treatment chamber for the above mentioned low pressure plasma treatment or performed immediately following the exit of the material out of the low pressure treatment chamber. When the low pressure plasma treatment is performed during the melt-kneading of the thermoplastic resin, the lamination can be performed either inside the die or outside the die. Alternatively, the thermoplastic resin plasma-treated during melt-kneading can be used for lamination as a film adhesive after film forming in advance or lamination is performed by the technique of extrusion coating. Further, it is of course optional to perform the lamination by reheating a once cooled thermoplastic resin after the low pressure plasma treatment with another material. In particular, the procedure of lamination carried out within the low pressure plasma treatment chamber is advantageous because the adhesive bonding takes place in a highly active plasma atmosphere free from moisture, dusts and the like foreign materials so that the laminated material prepared in such a procedure is imparted with a further improved adhesive bonding strength between layers. It is optional in carrying out the lamination to use an adhesive according to need.

As is described above, the object of the present invention can be achieved by the low pressure plasma treatment of the thermoplastic resin only when the temperature at the treatment is at least 5°C, higher than the melting or softening point of the resin and no satisfactory results can be obtained by the low pressure plasma treatment at a lower temperature.

Figure 5 is a schematic illustration of an apparatus for suitably performing continuous preparation of a laminated material according to the second aspect of the present invention. The thermoplastic resin molded and kneaded in the extruder 3 is extruded in a sheet like form 5 and led into the space between the electrodes 6, 6' in the low pressure plasma treatment chamber 1 where it is subjected to the low pressure plasma treatment. Another intrinsically non-adhesive thermoplastic resin is extruded out of a second extruder 3' in a sheet like form 5' and these two sheets 5, 5' are adhesively bonded together into a laminate by passing a pressure roller 13 followed by cooling on a cooling roller 9. The laminated material is led out of the chamber 1 through a preparatory vacuum chamber 12 and taken up on a winding-up unit 10. Apart from the illustration in Figure 5 in which the sheet 5′ of the second thermoplastic resin is laminated without being subjected to the low pressure plasma treatment, it is particularly preferable that the second resin sheet 5′ is also subjected to the low pressure plasma treatment at a temperature at least 5°C higher than the melting or softening point of the resin.

As is understood from the above description, the second aspect of the present invention provides a means for obtaining a laminated material having an extremely high adhesive bonding strength between layers even without using an adhesive. The efficiency of the treatment is particularly high when the lamination is performed at an elevated temperature of the laminated sheets still in the highly active plasma atmosphere. Different from conventional methods such as the co-extrusion multilayer molding, lamination molding and the like, a laminated material can be prepared without using an adhesive resin such as modified polyolefins or an adhesive such as urethane and epoxy based ones and the process of lamination requires no complicated extrusion and coating machines as well as no working steps therefore so that the overall costs for lamination can be much lower than in the conventional methods.

Accordingly, the laminated material obtained in this manner is a material having a composite of the excellent properties possessed by the respective base materials such as low oxygen permeability, low moisture permeability, printability, heat-sealability, mechanical strength, resistance against chemicals, corrosion resistance, and electric conductivity. The laminated materials according to the invention are useful as a wrapping and packing material, industrial material, building material and others.

In the following, the present invention is described in more detail by way of examples.

Example 1

A sheet of a GP-grade polystyrene having a melt index of 3.8 g/10 minutes and a glass transition point of 80°C was held in a low pressure plasma treatment chamber and heated to 210°C and the chamber was evacuated to a pressure of $1 \times 10^{-2}$ Torr while the resin sheet was kept at the above temperature. Then, nitrogen gas was passed through the chamber at a rate of 50 ml/minute to control the pressure inside the chamber at 1 Torr and the low pressure plasma treatment of the resin sheet was performed for 60 seconds by supplying a discharge power of 50 watts output.

The contact angle of water on the surface of the thus treated resin sheet was 39° which was much smaller than the corresponding value of 86° before the treatment indicating a great increase in the hydrophilicity of the surface.

Example 2

A sheet of a high density polyethylene having a density of 0.965 g/cm$^3$, melt index of 14 g/10 minutes and melting point of 131°C in place of the GP polystyrene sheet was subjected to the low pressure plasma treatment in substantially the same manner as in Example 1 except that the temperature of the resin sheet during the treatment was 190°C.

The contact angle of water on the thus treated surface was 61° while the value was 100° before the treatment.

Example 3

A sheet of a high density polyethylene having a density of 0.967 g/cm$^3$, melt index of 5.8 g/10 minutes and melting point of 136°C in place of the GP polystyrene sheet was subjected to the low pressure plasma treatment in substantially the same manner as in Example 1 except that the temperature of the resin sheet during the treatment was 170°C and the length of time for the treatment was 10 seconds.

The contact angle of water on the thus treated surface was 68° while the value was 95° before the treatment.

Comparative Example 1

Substantially the same experimental procedure as in Example 3 was repeated except that the temperature of the resin sheet during the low pressure plasma treatment was 127°C. The contact angle of water on the thus plasma-treated surface of the resin sheet was 78° and this value changes only slightly to 77° when the resin sheet was subsequently heated at 170°C.

Comparative Example 2

The experimental procedure was substantially the same as in Example 3 except that the temperature of the resin sheet was 30°C to give a contact angle of water of 95° after heating at 170°C.

Examples 4 to 8

Sheets of two different kinds of thermoplastic resins A and B indicated in Table 1 below were each held in a low pressure plasma treatment chamber and heated at a temperature also indicated in the same table and then the chamber was evacuated to a pressure of $1 \times 10^{-2}$ Torr while the resin sheets were kept at the respective temperatures. Nitrogen gas was passed through the chamber at a rate of 50 ml/minute to control the pressure inside the chamber at 1 Torr and the low pressure plasma treatment of the resin sheets was performed for 60 seconds by supplying a discharge power of 50 watts output. Thereafter, the thus

7

plasma-treated resin sheets A and B were laid one on the other in such a manner that the plasma-treated surfaces were in direct contact with each other in the plasma treatment chamber and bonded together under pressure to prepare a laminated material. The thus prepared laminated material was subjected to the test of the peeling resistance between the base sheets 180° pulling at the bonded portion. The results are shown in Table 1 together with the comparative data obtained with similar laminated materials prepared without the treatment. In Table 1, the types of the thermoplastic resins are given by the following abbreviations.

EVOH: a copolymer of ethylene and vinyl alcohol containing 40% by weight of ethylene; density 1.19 g/cm$^3$; melt index 1.5 g/10 minutes; melting point 181°C.

PC: a polycarbonate resin having an average molecular weight of 22,000; glass transition point 147°C.

GP-PS: a GP-grade polystyrene; melt index 3.8 g/10 minutes; glass transition point 80°C.

PP: a random copolymer of propylene and ethylene containing 4% by weight of ethylene; melt index 7.0 g/10 minutes; melting point 155°C.

EVA: a copolymer of ethylene and vinyl acetate containing 20% by weight of vinyl acetate; density 0.939 g/cm$^3$; melt index 20 g/10 minutes; melting point 92°C.

LDPE: a low density polyethylene; density 0.921 g/cm$^3$; melt index 4 g/10 minutes; melting point 111°C.

HDPE: a high density polyethylene; density 0.955 g/cm$^3$; melt index 0.05 g/10 minutes; melting point 130°C.

## TABLE 1

| Example No. | Thermoplastic resin | | | | Peeling resistance, g/15 mm | |
| | A | | B | | | |
| | Type | Temperature °C | Type | Temperature °C | Treated | Untreated |
|---|---|---|---|---|---|---|
| 4 | EVOH | 210 | PP | 220 | 650 | 20 |
| 5 | EVOH | 210 | EVA | 150 | 2100 | 520 |
| 6 | EVOH | 210 | LDPE | 190 | 1600 | 20 |
| 7 | PC | 250 | LDPE | 190 | 1300 | 20 |
| 8 | GP-PS | 210 | HDPE | 190 | 280 | 30 |

Comparative Example 3

A laminated material was prepared in substantially the same manner as in Example 4 except that the low pressure plasma treatment was performed at 25°C of the resin sheets followed by heating thereof at 220°C. The peeling resistance of this laminated material by 180° pulling was 60 g/15 mm.

Comparative Example 4

A laminated body was prepared in substantially the same manner as in Example 4 except that the low pressure plasma treatment was performed at 120°C of the resin sheets followed by heating thereof at 220°C. The peeling resistance of this laminated material by 180° pulling was 70 g/15 mm.

Example 9

The experimental procedure was substantially the same as in Example 4 but the thermoplastic resins A and B were a copolymer of ethylene and vinyl acetate and a 95:5 by weight resin blend of a polypropylene and a copolymer of ethylene and vinyl acetate, respectively, and the low pressure plasma treatment was performed for 3 seconds at a temperature of 215°C with carbon dioxide as the gas in place of nitrogen. The peeling resistance of the thus obtained laminated material by 180° pulling was 1200 g/15 mm.

Example 10

The experimental procedure was just the same as in Example 9 except that the gas was nitrous oxide $N_2O$ in place of carbon dioxide. The peeling resistance of the thus obtained laminated material by 180° pulling was 1100 g/15 mm.

Example 11

The experimental procedure was about the same as in Example 4 except that the low pressure plasma treatment was performed for 3 seconds at a temperature of 215°C with nitrous oxide as the gas in place of nitrogen. The peeling resistance of the thus obtained laminated material by 180° pulling was 1600 g/15 mm.

**Example 12**

The experimental procedure was substantially the same as in Example 4 but the thermoplastic resins A and B were a copolymer of ethylene and vinyl acetate and a 99:1 by weight polymer blend of a polypropylene and an ethylenepropylene elastomer containing 26% by weight of propylene and having a Mooney viscosity of $ML_{1+4}$ 100°C 70, respectively, and the low pressure plasma treatment was performed for 3 seconds at a treatment temperature of 215°C with nitrous oxide as the plasma supporting gas in place of nitrogen. The peeling resistance of the thus obtained laminated material by 180° pulling was 1800 g/15 mm.

**Example 13**

The experimental procedure was substantially the same as in Example 13 except that the thermoplastic resin B was a 79:20:1 by weight blend of a polypropylene, a low density polyethylene having a density of 0.919 $g/cm^3$ and a melt index of 1 g/10 minutes and titanium dioxide. The peeling resistance of the thus obtained laminated material by 180° pulling was 3000 g/15 mm.

**Example 14**

A 200 μm thick film of a high density polyethylene having a density of 0.955 $g/cm^3$, melt index of 0.05 g/10 minutes and melting point of 130°C and a 1 mm thick aluminum plate were each held in a low pressure plasma treatment chamber and heated at 200°C and the chamber was evacuated to a pressure of $1 \times 10^{-2}$ Torr while the film and the plate were kept at the above mentioned temperature. Oxygen gas was passed through the chamber at a rate of 50 ml/minute to control the pressure inside the chamber at 1 Torr and the surface of the polyethylene film was subjected to a low pressure plasma treatment for 20 seconds by supplying a discharge power of 50 watts output. Thereafter, the polyethylene film and the aluminum plate were laminated by press-bonding with the plasma-treatment surface of the resin film as the bonding surface. The peeling resistance of the thus obtained laminated material by 180° pulling was 1600 g/15 mm.

**Example 15**

The plasma-treated polyethylene film obtained in Example 14 was cooled to 50°C and then reheated at 200°C before it was laminated with the aluminum plate in the same manner as in Example 14. The peeling resistance of the thus obtained laminated material by 180° pulling was 100 g/15 mm.

**Comparative Example 5**

Lamination was tried with the same polyethylene film and aluminum plate as used in Example 14 by press-bonding at 200°C without performing the low pressure plasma treatment only to find that no adhesive bonding took place at all between them.

**Comparative Example 6**

A laminated material was prepared in just the same manner as in Example 14 except that the low pressure plasma treatment was performed at room temperature instead of 200°C. The peeling resistance of the thus obtained laminated material by 180° pulling was 30 g/15 mm.

**Example 16**

The experimental procedure was substantially the same as in Example 14 except that the aluminum plate was replaced with a glass plate which was a slide glass used for optical microscopy. The peeling resistance of the thus obtained laminated material of the polyethylene film and glass plate by 180° pulling was 2400 g/15 mm.

**Example 17**

The experimental procedure was substantially the same as in Example 16 except that the polyethylene film after the low pressure plasma treatment was cooled to 50°C and then reheated at 200°C before it was laminated with the glass plate. The peeling resistance of the thus obtained laminated material by 180° pulling was 500 g/15 mm.

**Comparative Example 7**

Lamination was tried with the same polyethylene film and glass plate as used in Example 16 by press-bonding at 200°C without performing the low pressure plasma treatment only to find that no adhesive bonding took place at all between them.

**Claims**

1. A method for the treatment of a thermoplastic resin for improving the surface properties which method comprises subjecting the thermoplastic resin to a low pressure gas plasma in which a gas or a mixture of gases which improves the surface treatment is blown to the surface of the resin in a closed chamber, characterized in that the plasma treatment is carried out under the following conditions:
    the thermoplastic resin to be treated is selected from the group consisting of high-density polyethylene, low-density polyethylene, polypropylene, copolymers of ethylene and acrylic acid, copolymers of ethylene and vinyl acetate, copolymers of ethylene and vinyl alcohol, copolymers of ethylene and propylene, copolymers of ethylene and butene-1, polyesters, polycarbonate, polyamides, general purpose polystyrenes, high-impact polystyrenes. AS resins, ABS resins, polyvinyl chloride, polyvinylidene chloride, polyvinyl alcohol and acrylic resins,

the pressure in the chamber is 0,005 to 20 Torr (0,67 to 2666,4 Pa),

the gas to be used for the gas plasma is selected from $N_2$, $O_2$, $N_2O$ and $CO_2$, and

the temperature in the chamber is at least 5°C higher than the melting or softening point of the resin.

2. The method according to Claim 1, wherein the low pressure plasma treatment of the thermoplastic resin is performed directly as the thermoplastic resin is extruded out of the die of an extrusion molding machine and introduced into the low pressure plasma treatment chamber.

3. A method for the preparation of a laminated material which comprises subjecting a thermoplastic resin to a low pressure gas plasma in which a gas or a mixture of gases which improves the surface treatment is blown to the surface of the resin in a closed chamber and which method further comprises laminating the thus low pressure plasma-treated thermoplastic resin with another material which is a material different from the thermoplastic resin, characterized in that the plasma treatment is carried out under the following conditions:

the thermoplastic resin to be treated is selected from the group consisting of high-density polyethylene, low-density polyethylene, polypropylene, copolymers of ethylene and acrylic acid, copolymers of ethylene and vinyl acetate, copolymers of ethylene and vinyl alcohol, copolymers of ethylene and propylene, copolymers of ethylene and butene-1, polyesters, polycarbonate, polyamides, general purpose polystyrenes, high-impact polystyrenes, AS resins, ABS resins, polyvinyl chloride, polyvinylidene chloride, polyvinyl alcohol and acrylic resins,

. the pressure in the chamber is 0,005 to 20 Torr (0,67 to 2666,4 Pa),

the gas to be used for the gas plasma is selected from $N_2$, $O_2$, $N_2O$ and $CO_2$, and

the temperature in the chamber is at least 5°C higher than the melting or softening point of the resin, and

the material different from the plasma-treated thermoplastic resin is selected from the group consisting of thermoplastic resins different from the plasma-treated thermoplastic resin, papers, and metals.

**Patentansprüche**

1. Verfahren zur Behandlung eines thermoplastischen Harzes zur Verbesserung der Oberflächeneigenschaften, dieses Verfahren umfaßt Unterwerfen des thermoplastischen Harzes einem Niederdruck-Gasplasma in welchem ein Gas oder ein Gemisch von Gasen, welches die Oberflächenbehandlung verbessert, in einer geschlossenen Kammer auf die Oberfläche des Harzes geblasen wird, dadurch gekennzeichnet, daß die Plasmabehandlung unter den folgenden Bedingungen durchgeführt wird:

das zu behandelnde thermoplastische Harz wird ausgewählt aus der Gruppe bestehend aus Polyethylen mit hoher Dichte, Polyethylen mit niedriger Dichte, Polypropylen, Copolymeren aus Ethylen und Acrylsäure, Copolymeren aus Ethylen und Vinylacetat, Copolymeren aus Ethylen und Vinylalkohol, Copolymeren aus Ethylen und Propylen, Copolymeren aus Ethylen und Buten-1, Polyestern, Polycarbonat, Polyamiden, Polystyrolen für allgemeine Zwecke, hochschlagfesten Polystyrol, AS-Harzen, ABS-Harzen, Polyvinylchlorid, Polyvinylidenchlorid, Polyvinylalkohol und Acrylharzen,

der Druck in der Kammer beträgt 0,005 bis 20 Torr (0,67 bis 2666.4 Pa),

das für das Gasplasma zu verwendende Gas wird ausgewählt aus $N_2$, $O_2$, $N_2O$ und $CO_2$, und

die Temperatur in der Kammer ist mindestens um 5°C höher als der Schmelz- oder Erweichungspunkt des Harzes.

2. Verfahren nach Anspruch 1, worin die Niederdruck-Plasmabehandlung des thermoplastischen Harzes direkt durchgeführt wird, während das thermoplastische Harz aus der Gußform einer Strangpressenmaschine extrudiert und in die Niederdruck-Plasmabehandlungskammer eingeführt wird.

3. Verfahren zur Behandlung eines laminierten Materials, welches umfaßt Unterwerfen eines thermoplastischen Harzes einem Niederdruck-Gasplasma, in welchem ein Gas oder ein Gemisch von Gasen, welches die Oberflächenbehandlung verbessert, in einer geschlossenen Kammer auf die Oberfläche des Harzes geblasen wird und dieses Verfahren umfßt weiter Laminieren des so Niederdruck-Plasma-behandelten thermoplastischen Harzes mit einem anderen Material, welches ein zum thermoplastischen Harz unterschiedliches Material ist, dadurch gekennzeichnet, daß

die Plasmabehandlung unter den folgenden Bedingungen ausgeführt wird:

das zu behandelnde thermoplastische Harz wird ausgewählt aus der Gruppe bestehend aus Polyethylen mit hoher Dichte, Polyethylen mit niedriger Dichte, Polypropylen, Copolymeren aus Ethylen und Acrylsäure, Copolymeren aus Ethylen und Vinylacetat, Copolymeren aus Ethylen und Vinylalkohol, Copolymeren aus Ethylen und Propylen, Copolymeren aus Ethylen und Buten-1, Polyesteren, Polycarbonat, Polyamiden, Polystyrolen für allgemeine Zwecke, hochschlagfesten Polystyrolen, AS-Harzen, ABS-Harzen, Polyvinylchlorid, Polyvinylidenchlorid, Polyvinylalkohol und Acrylharzen, der Druck in der Kammer beträgt 0,005 bis 20 Torr (0,67 bis 2666,4 Pa),

das für das Gasplasma zu verwendende Gas wird ausgewählt aus $N_2$, $O_2$, $N_2O$ und $CO_2$, und

die Temperatur in der Kammer ist mindestens um 5°C höher als der Schmelz- oder Erweichungspunkt des Harzes, und

das vom Plasma-behandelten thermoplastischen Harz unterschiedliche Material ist ausgewählt aus der Gruppe bestehend aus thermoplastischen Harzen unterschiedlich vom Plasma-behandelten thermoplastischen Harz, Papieren und Metallen.

## Revendications

1. Procédé pour le traitement d'une résine thermoplastique pour l'amélioration des propriétés superficielles, lequel procédé comprend l'exposition de la résine thermoplastique à un plasma gazeux à basse pression, dans lequel un gaz ou un mélange de gaz améliorant le traitement de surface est insufflé à la surface de la résine dans une chambre close, caractérisé en ce que le traitement par plasma est effectué dans les conditions suivantes:

la résine thermoplastique à traiter est choisie parmi le polyéthylène haute densité, le polyéthylène basse densité, le polypropylène, des copolymères d'éthylène et d'acide acrylique, des copolymères d'éthylène et d'acétate de vinyle, des copolymères d'éthylène et d'alcool vinylique, des copolymères d'éthylène et de propylène, des copolymères d'éthylène et de butane-1, des polyesters, le polycarbonate, des polyamides, des polystyrènes tous usages, des polystyrènes choc, des résines AS, des résines ABS, le poly(chlorure de vinyle), le poly(chlorure de vinylidène), le poly(alcool vinylique) et des résins acryliques,

la pression dans la chambre est de 0,67 à 2666,4 Pa (0,005 à 20 Torr),

le gaz à utiliser pour le plasma gazeux est choisi parmi $N_2$, $O_2$, $N_2O$ er $CO_2$, et

la température dans la chambre est supérieure d'au moins 5°C au point de fusion ou de ramollissement de la résine.

2. Procédé selon la revendication 1, dans lequel le traitement par plasma à basse pression de la résine thermoplastique est effectué directement pendant que la résine thermoplastique est extrudée hors de la filière d'une machine de moulage par extrusion, et introduite dans la chambre de traitement par plasma à basse pression.

3. Procédé pour la fabrication d'un matériau stratifié, lequel comprend l'exposition d'une résine thermoplastique à un plasma gazeux à basse pression, dans lequel un gaz ou un mélange de gaz améliorant le traitement de surface est insufflé à la surface de la résine dans une chambre close, et lequel procédé comprend en outre la stratification de la résine thermoplastique ainsi traitée par plasma à basse pression, avec un autre matériau qui est un matériau différent de la résine thermoplastique, caractérisé en ce que le traitement par plasma est effectué dans les conditions suivantes:

la résine thermoplastique à traiter est choisie parmi le polyéthylène haute densité, le polyéthylène basse densité, le polypropylène, des copolymères d'éthylène et d'acide acrylique, des copolymères d'éthylène et d'acétate de vinyle, des copolymères d'éthylène et d'alcool vinylique, des copolymères d'éthylène et de propylène, des copolymères d'éthylène et de butane-1, des polyesters, le polycarbonate, des polyamides, des polystyrènes tous usages, des polystyrènes choc, des résines AS, des résines ABS, le poly(chlorure de vinyle), le poly(chlorure de vinylidène), le poly(alcool vinylique) et des résines acryliques,

la pression dans la chamber est de 0,67 à 2666,4 Pa (0,005 à 20 torr),

le gaz à utiliser pour la plasma gazeux est choisi parmi $N_2$, $O_2$, $N_2O$ er $CO_2$, et

la température dans la chambre est supérieure d'au moins 5°C au point de fusion ou de ramollissement de la résine, et

le matériau différent de la résine thermoplastique traitée par plasma est choisi parmi des résines thermoplastiques différentes de la résine thermoplastique traitée par plasma, des papiers et des métaux.

EP 0 127 149 B1

FIG.1

FIG.2

FIG.3

1

FIG. 4

FIG.5